# EUROPÄISCHE PATENTANMELDUNG

(11) **EP 4 001 836 A2**
(43) Veröffentlichungstag der Anmeldung: **25.05.2022**
(21) Anmeldenummer: 21206753.2
(22) Anmeldetag: 05.11.2021
(51) Int. Cl.: G01B 21/04, G06T 7/60

(54) **COMPUTERIMPLEMENTIERTES VERFAHREN ZUM ERMITTELN EINES WERTS EINES GEOMETRISCHEN PARAMETERS**

(30) Priorität: 11.11.2020 DE 102020129792
(71) Anmelder: Volume Graphics GmbH, 69115 Heidelberg (DE)
(72) Erfinder: GONDROM-LINKE, Sven, 69115 Heidelberg (DE); SCHWADERER, Gerd, 69115 Heidelberg (DE); REINHART, Christof, 69115 Heidelberg (DE); FLEßNER, Matthias, 69115 Heidelberg (DE); POLIWODA, Christoph, 69115 Heidelberg (DE); SCHÜLLER, Sören, 69115 Heidelberg (DE); RHEIN, Markus, 69115 Heidelberg (DE); GÜNTHER, Thomas, 69115 Heidelberg (DE)
(74) Vertreter: Patentanwälte Olbricht Buchhold Keulertz

(57) **Zusammenfassung**

Die Erfindung betrifft ein computerimplementiertes Verfahren (100) zum Ermitteln eines Werts eines geometrischen Parameters zumindest eines zu messenden Teils eines Objekts aus mindestens einer zweidimensionalen Abbildung eines Messvolumens, wobei das Messvolumen das Objekt aufweist und das zu messende Teil des Objekts eine Position im Messvolumen umfasst, wobei die mindestens eine zweidimensionale Abbildung einer Aufnahmegeometrie zugeordnet ist, wobei die Aufnahmegeometrie eine geometrische Beziehung zwischen einem Detektor zum Ermitteln von zweidimensionalen Abbildungen und dem Objekt beschreibt, wobei das Verfahren (100) die folgenden Schritte aufweist: Ermitteln (102) mindestens einer zweidimensionalen Abbildung des Messvolumens; und Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils. Mit der Erfindung wird damit ein computerimplementiertes Verfahren (100) bereitgestellt, bei dem Messungen in zweidimensionalen Abbildungen von Objekten möglichst schnell und genau durchgeführt werden können.

## Beschreibung

Die Erfindung betrifft ein computerimplementiertes Verfahren zum Ermitteln eines Werts eines geometrischen Parameters.

Bei bzw. nach der Herstellung von Bauteilen können zur Qualitätssicherung dimensionelle Messungen in zweidimensionalen Abbildungen der Bauteile durchgeführt werden. Für dimensionelle Messungen kann z. B. eine zu messende Strecke am Bauteil ermittelt werden. Dazu wird die Entfernung der Streckenenden zueinander bestimmt. Die Bestimmung der Entfernung zwischen den Streckenenden hängt von der Entfernung der Streckenenden zur Abbildungsvorrichtung ab, mit der die zweidimensionale Abbildung des Bauteils erfasst wurde. Es muss daher eine Tiefeninformation über die Position der Streckenenden in der zweidimensionalen Abbildung bekannt sein oder ermittelt werden. Mit der Tiefeninformation kann die abgebildete Entfernung in eine dimensionelle Größe umgerechnet werden.

Bekannt ist, bei optischen Messungen in Profilprojektoren telezentrische Objektive zu verwenden (vgl. z. B. Rainer Schuhmann, Thomas Thöniß: Telezentrische Systeme für die optische Meß- und Prüftechnik. In: Technisches Messen. Band 65, Nr. 4, 1998, ISSN 0171-8096, S. 131-136 und Dutschke W. (2002) Meßmikroskop und Profilprojektor. In: Fertigungsmesstechnik. Vieweg+Teubner Verlag), bei welchen der Abbildungsmaßstab unabhängig von der Entfernung des Objekts vom Objektiv konstant ist Allerdings sind diese vergleichsweise teuer, zudem kann bei Profilprojektoren meist nur in einer klar definierten Messebene gemessen werden. Somit werden meist Objektive verwendet, bei welchen der Abbildungsmaßstab nicht unabhängig von der Entfernung des Objekts vom Objektiv ist. Auch eine Durchstrahlung eines Objekts mit Röntgenstrahlung weist üblicherweise diese Eigenschaft aus, wenn beispielsweise durch Röntgenquelle und Flächendetektor eine Kegelstrahlgeometrie gebildet wird. Es ist nicht trivial, anhand der daraus entstehenden zweidimensionalen Abbildung bzw. Projektion eine Tiefeninformationen abzuleiten. Weiter muss zunächst die zu messende Strecke am Bauteil identifiziert und lokalisiert werden. Dies ist bei Verwendung eines computerimplementierten Verfahrens nicht trivial, insbesondere, wenn dies mit einer Subpixel-Genauigkeit erreicht werden soll. Weiter erhöht sich der Zeitaufwand, wenn z. B. die Streckenenden verschiedene Entfernungen zur Abbildungsvorrichtung aufweisen.

Aufgabe der Erfindung ist es daher, ein Verfahren zu schaffen, bei dem Messungen in zweidimensionalen Abbildungen von Bauteilen möglichst schnell und genau durchgeführt werden können.

Hauptmerkmale der Erfindung sind in den Ansprüchen 1 bis 15 angegeben. Ausgestaltungen sind Gegenstand der Ansprüche 2 bis 14.

Erfindungsgemäß ist ein computerimplementiertes Verfahren zum Ermitteln eines Werts eines geometrischen Parameters zumindest eines zu messenden Teils eines Objekts aus mindestens einer zweidimensionalen Abbildung eines Messvolumens vorgesehen, wobei das Messvolumen das Objekt aufweist und das zu messende Teil des Objekts eine Position im Messvolumen umfasst, wobei die mindestens eine zweidimensionale Abbildung einer Aufnahmegeometrie zugeordnet ist, wobei die Aufnahmegeometrie eine geometrische Beziehung zwischen einem Detektor zum Ermitteln von zweidimensionalen Abbildungen und dem Objekt beschreibt, wobei das Verfahren die folgenden Schritte aufweist: Ermitteln mindestens einer zweidimensionalen Abbildung des Messvolumens; und Identifizieren des mindestens einen zu messenden Teils des Objekts in der mindestens einen zweidimensionalen Abbildung und Ermitteln eines Werts des geometrischen Parameters des identifizierten mindestens einen zu messenden Teils.

Die Erfindung stellt damit ein computerimplementiertes Verfahren bereit, mit dem ein zu messender Teil des Objekts identifiziert wird und einer dimensionellen Messung unterzogen wird. Dazu wird nach dem Ermitteln der zweidimensionalen Abbildung des Messvolumens, in dem das Objekt angeordnet ist, zunächst der Teil des Objekts identifiziert, der einer dimensionellen Messung unterzogen werden soll. Der identifizierte Teil des Objekts wird dann einer dimensionellen Messung unterzogen, mit der ein Wert eines geometrischen Parameters ermittelt wird. Da der Ermittlung des geometrischen Parameters die Identifizierung des zu messenden Teils des Objekts vorangeht, kann der geometrische Parameter mit einer ausreichenden Genauigkeit ermittelt werden. Der geometrische Parameter kann z. B. die Position einer Kante bzw. einer Oberfläche bzgl. eines Teils des Objekts sein, der Durchmesser, die Ausrichtung und/oder die Tiefe einer Bohrung, der Durchmesser eines Bolzens, der Abstand von zwei Teilen des Objekts oder von geometrischen Merkmalen, wie einer Bohrung, oder die Entfernung zwischen zwei Punkten des Objekts sein. Mit der Erfindung wird ein geometrischer Parameter mittels einer zweidimensionalen Abbildung des zu messenden Objekts bereitgestellt, der für eine Qualitätssicherung des Objekts verwendet werden kann. Die zweidimensionale Abbildung kann z. B. eine durchstrahlende Abbildung oder eine optische Abbildung des Objekts sein. Die durchstrahlende Abbildung kann z. B. mittels einer Radiographie mit beispielsweise einer Kegelstrahl-Geometrie ermittelt werden. Die optische Abbildung kann zum Beispiel mittels einer Kamera, ggf. mit definierten Bildwinkel, ermittelt werden. Die dimensionelle Messung kann somit einen Wert eines geometrischen Parameters zumindest eines Teils des Objekts ermitteln. Die Qualitätssicherung kann damit mit einer geringen Anzahl von zweidimensionalen Abbildungen, z. B. lediglich einer zweidimensionalen Abbildung, des zu messenden Objekts durchgeführt werden. Auf diese Weise kann die dimensionelle Messung mit geringem Zeitaufwand bei ausreichender Genauigkeit durchgeführt werden.

Die Aufnahmegeometrie kann zum Beispiel die relative Positionierung zwischen dem zu messenden Objekt und den Komponenten eines Systems zum Ermitteln von zweidimensionalen Abbildungen des Objekts sein, wobei die Komponenten z. B. eine Strahlungsquelle und ein Detektor oder eine Messkamera sein können. Z. B. kann sie die relative Positionierung zwischen einem Detektor zum Ermitteln von zweidimensionalen Abbildungen und dem Objekt mittels Abständen zueinander beschreiben. Auch eine Ausrichtung des Objekts in Bezug zum Detektor kann durch die Aufnahmegeometrie beschrieben werden.

In einem Beispiel kann der Schritt: Identifizieren des mindestens einen zu messenden Teils des Objekts in der mindestens einen zweidimensionalen Abbildung und Ermitteln eines Werts des geometrischen Parameters des identifizierten mindestens einen zu messenden Teils, weiter die folgenden Unterschritte aufweisen: Bereitstellen mindestens einer zweidimensionalen Referenzabbildung, die mindestens einen bekannten Wert mindestens eines geometrischen Referenz-Parameters aufweist; und Vergleichen der mindestens einen zweidimensionalen Referenzabbildung mit der mindestens einen zweidimensionalen Abbildung.

Der Wert des geometrischen Parameters wird hierbei gemessen, indem ein Vergleich der mindestens einen ermittelten zweidimensionalen Abbildung mit mindestens einer zweidimensionalen Referenzabbildung durchgeführt wird, für die der Wert des zu ermittelnden geometrischen Parameters bekannt ist.

Gemäß diesem Beispiel kann die mindestens eine zweidimensionale Referenzabbildung ein Messvolumen abbilden, das ein Referenzobjekt mit gleicher Soll-Geometrie wie das Objekt aufweist, wobei die mindestens eine zweidimensionale Referenzabbildung insbesondere eine simulierte oder eine reale Abbildung des Referenzobjekts ist.

Bei der Referenzabbildung kann es sich um simulierte oder reale zweidimensionale Abbildungen eines Referenzobjekts gleicher Nominalgeometrie wie das zu messende Objekt handeln. Die Aufnahmegeometrie der zweidimensionalen Referenzabbildung des Referenzobjekts sollte möglichst identisch zu der Aufnahmegeometrie sein, mit der die zweidimensionale Abbildung des gemessenen Objekts ermittelt wurde. Im Falle der simulierten Referenzabbildung kann eine Durchstrahlungssimulation bzw. Vorwärtsprojektion oder optische Simulation des Objekts verwendet werden. Für die Simulation bzw. Vorwärtsprojektion kann ein CAD-Modell des Objekts oder die, ggf. mit einem anderen Sensor, gemessene Geometrie eines anderen Objekts als Grundlage verwendet werden. Die reale Aufnahme der Referenzabbildung wird mit einem Objekt durchgeführt, von dem die Geometrie bzw. die relevanten geometrischen Eigenschaften bekannt sind. Dies kann z. B. durch eine Referenzmessung mit einem anderen Sensor ermittelt werden. In beiden Fällen sind somit die Werte der zu messenden Messgrößen in der zweidimensionalen Referenzabbildung bekannt.

Weiter kann in diesem Beispiel der Schritt: Identifizieren des mindestens einen zu messenden Teils des Objekts in der mindestens einen zweidimensionalen Abbildung und Ermitteln eines Werts des geometrischen Parameters des identifizierten mindestens einen zu messenden Teils, weiter die folgenden Unterschritte aufweisen: Ermitteln der Position des identifizierten mindestens einen zu messenden Teils im abgebildeten Messvolumen mittels der mindestens einen zweidimensionalen Abbildung; Ermitteln einer weiteren Position in der zweidimensionalen Referenzabbildung, wobei die weitere Position dem mindestens einen geometrischen Referenz-Parameters zugeordnet ist; und Ermitteln einer Abweichung der ermittelten Position zu der weiteren Position; Ermitteln eines Werts des geometrischen Parameters des identifizierten mindestens einen zu messenden Teils mittels der ermittelten Abweichung.

In diesem Beispiel werden die Position bzw. die Positionen des zu messenden geometrischen Parameters in der zweidimensionalen Abbildung und die Abweichung zu der zweidimensionalen Referenzabbildung ermittelt. Hieraus wird ein Wert des geometrischen Parameters abgeleitet.

Ggf. kann dieser Wert zunächst nur innerhalb einer Projektionsebene des Objekts errechnet werden bzw. seine Projektion auf die Projektionsebene. Die Position der zu messenden Teile in der oder den zweidimensionalen Abbildungen kann z. B. mit konventioneller Mustererkennung ermittelt werden, z. B. durch eine Erkennung von Kanten bzw. Übergängen von niedrigen zu hohen Grauwerten.

Gemäß diesem Beispiel kann weiter im Unterschritt: Vergleichen der mindestens einen zweidimensionalen Referenzabbildung mit der mindestens einen zweidimensionalen Abbildung, ein Bildkorrelationsverfahren verwendet werden.

In diesem Beispiel werden Verfahren der Bildkorrelation verwendet, z. B. eine Digital Image Correlation (DIC), um Abweichungen in der zweidimensionalen Abbildung zu der Referenzabbildung zu ermitteln. Eine DIC analysiert paarweise Bilddaten und ermittelt auf lokaler Ebene eine Zuordnung zwischen den beiden Abbildungen. Anhand dieser Zuordnung kann ermittelt werden, wo sich die gewünschten bzw. zu messenden Teile bzw. geometrischen Parameter in den Messdaten befinden, die der zweidimensionalen Abbildung zugrunde liegen. Durch den Vergleich mit der Referenzabbildung geschieht dies implizit, so dass beispielsweise keine Mustererkennung benötigt wird, um die zu messenden Teile des Objekts explizit zu identifizieren. Diese Mustererkennung müsste ansonsten aufgabenspezifisch einzeln für jedes zu messende Teil des Objekts eingerichtet werden, während DIC weitestgehend universell anwendbar ist. Sobald die Zuordnung zwischen der zweidimensionalen Referenzabbildung und der ermittelten zweidimensionalen Abbildung durch die DIC ermittelt wurde, können Werte für geometrische Parameter für die ermittelte zweidimensionale Abbildung ermittelt werden. Dies kann beispielsweise durch die Berücksichtigung der Referenzwerte und der Verzerrungen bzw. Unterschiede der zweidimensionalen Abbildung zu der zweidimensionalen Referenzabbildung geschehen, die durch lokale Verschiebungsvektoren beschrieben werden können. Alternativ kann durch die DIC die Lage der zu messenden Teile in der zweidimensionalen Abbildung ermittelt und hieraus direkt ein Wert für den geometrischen Parameter abgeleitet werden. Dies kann z. B. der Abstand zwischen zwei gegenüberliegenden Kanten sein, die in diesem Fall jeweils ein zu messendes Teil des Objekts wären.

In einem weiteren Beispiel können im Schritt: Ermitteln mindestens einer zweidimensionalen Abbildung des Messvolumens, mindestens zwei zweidimensionale Abbildungen des Messvolumens ermittelt werden, die das Objekt aus verschiedenen Richtungen darstellen, wobei zumindest im Schritt: Identifizieren des mindestens einen zu messenden Teils des Objekts in der mindestens einen zweidimensionalen Abbildung und Ermitteln eines Werts des geometrischen Parameters des identifizierten mindestens einen zu messenden Teils, alle der mindestens zwei zweidimensionalen Abbildungen gemeinsam verwendet werden.

Für einen geometrischen Parameter werden zweidimensionale Abbildungen ausgewertet, die das Objekt aus verschiedenen Richtungen darstellen. Aus einer gemeinsamen Betrachtung wird das Messergebnis für den geometrischen Parameter abgeleitet. Wird ein geometrischer Parameter bzw. ein zu messender Teil des Objekts in mindestens zwei Abbildungen mit entsprechend unterschiedlicher Aufnahmegeometrie betrachtet, kann die Lage in drei Dimensionen des Messvolumens und damit die Tiefeninformation beispielsweise durch Triangulation ermittelt werden. Auf diese Weise kann nun durch das Wissen über die Entfernung des zu messenden Teils des Objekts von dem Detektor der Wert des geometrischen Parameters abgeleitet werden. Ebenso ist es auch möglich, die Werte des geometrischen Parameters in drei Dimensionen zu ermitteln, anstatt die Projektion des geometrischen Parameters auf die Bildebene der zweidimensionalen Abbildungen zu ermitteln. Aus den zweidimensionalen Abbildungen können weiter beispielsweise jeweils einzeln vorläufige Werte des geometrischen Parameters ermittelt werden und diese zu einem endgültigen Wert des geometrischen Parameters verrechnet werde, z. B. durch gewichtete Mittelung. Je mehr zweidimensionale Abbildungen aus unterschiedlichen Richtungen in die Ermittlung des geometrischen Parameters mit einbezogen werden, desto genauer wird tendenziell der ermittelte Wert. Eine Rekonstruktion von Volumendaten ist in diesem Fall nicht zwingend notwendig, da die Ermittlung des Werts des geometrischen Parameters noch immer in den zweidimensionalen Abbildungen durchgeführt wird. Auf diese Weise sind tendenziell weniger zweidimensionale Abbildungen bzw. Projektionen nötig, als es bei einer Ermittlung eines Werts des geometrischen Parameters mittels vollständigen Rekonstruktion von Volumendaten aus den zweidimensionalen Abbildungen der Fall wäre.

Weiter kann im Schritt: Ermitteln der mindestens einen zweidimensionalen Abbildung des Messvolumens, der mindestens eine zu messende Teil des Objekts beispielsweise streifend abgebildet werden, und/oder der geometrische Parameter sich beispielsweise innerhalb eines vordefinierten Toleranzwinkelbereichs parallel zum Detektor erstrecken.

Die Aufnahmegeometrie wird so gewählt, dass der zu messende Teil des Objekts möglichst streifend abgebildet wird und/oder der zu messende Wert des geometrischen Parameters bei der Messung möglichst parallel zum Detektor orientiert ist. Z. B. kann eine zu messende Länge auf diese Weise genauer gemessen werden, da sich eine Änderung der Länge durch eine Positionsänderung der zu messenden Teile des Objekts, in diesem Fall die beiden Enden, die als Kanten in der zweidimensionalen Abbildung abgebildet werden, und somit auch Änderungen der zu messenden Länge, in der zweidimensionalen Abbildung besser erkennen lassen. Dies wäre nicht der Fall, wenn die Länge senkrecht zum Detektor orientiert wäre. In diesem Fall wäre es nicht nur schwierig, die Position des zu messenden Teils in der zweidimensionalen Abbildung zu messen, sondern auch das zu messende Teil überhaupt zu identifizieren. Alternativ oder zusätzlich kann in einem weiteren Schritt darauf geachtet werden, dass diese zu messenden Teile des Objekts bzw. Bereiche in den zweidimensionalen Abbildungen sich nicht mit anderen Geometrien oder Kanten gegenseitig überdecken bzw. von diesen überdeckt werden.

In einem weiteren Beispiel können im Schritt: Ermitteln mindestens einer zweidimensionalen Abbildung des Messvolumens, mindestens zwei zweidimensionale Abbildungen des Messvolumens ermittelt werden, die das Objekt aus verschiedenen Richtungen darstellen, wobei das Verfahren zwischen jenem Schritt und dem Schritt: Ermitteln eines Werts des geometrischen Parameters des identifizierten mindestens einen zu messenden Teils und Ermitteln eines Werts des geometrischen Parameters des identifizierten mindestens einen zu messenden Teils, die folgenden Schritte aufweist: Ermitteln mindestens eines Bereichs in den mindestens zwei zweidimensionalen Abbildungen, in dem kein Teil des Objekts angeordnet ist; und Ermitteln mindestens einer Hüllfläche im Messvolumen, die das Objekt einhüllt, mittels des mindestens einen Bereichs; wobei im Schritt: Ermitteln eines Werts des geometrischen Parameters des identifizierten mindestens einen zu messenden Teils und Ermitteln eines Werts des geometrischen Parameters des identifizierten mindestens einen zu messenden Teils, der Wert mittels der Hüllfläche ermittelt wird.

Anhand einer Erkennung der Bereiche mehrerer zweidimensionaler Abbildungen, in denen kein Teil des Objekts angeordnet ist, wird eine Hüllfläche des Objekts berechnet. Mit Hilfe dieser Hüllfläche wird der Wert des geometrischen Parameters gemessen. In einer zweidimensionalen Abbildung, die mittels einer durchstrahlenden Messung des Objekts bzw. des Messvolumens ermittelt wurde, zeichnen Bereiche ohne Abschwächung der Strahlen, Regionen des Messvolumens aus, in denen kein Teil des Objekts angeordnet ist. Diese Bereiche können in einer zweidimensionalen Abbildung, die mittels einer durchstrahlenden Messung ermittelt wurde, sehr einfach und schnell identifiziert werden. Liegt diese Information aus verschiedenen Richtungen, lässt sich sehr einfach, ohne eine Rekonstruktion der Volumendaten durchführen zu müssen, eine grobe Geometrie des Objekts im Messvolumen vorhersagen. Auf dieser groben Geometrie des Objekts kann dann ein Wert für den geometrischen Parameter ermittelt werden. Sowohl die Aufnahme der zweidimensionalen Abbildungen als auch die Ermittlung des geometrischen Parameters sind in diesem Fall sehr schnell. Die Hüllfläche ist dabei eine Abschätzung der Oberfläche des Objekts im Messvolumen. Die tatsächliche Oberfläche des Objekts kann, abgesehen von Messfehlern, nur innerhalb des von der Hüllfläche eingeschlossenen Bereichs liegen oder diese berühren. Es kann sich um eine konvexe Hüllfläche handeln. Dabei kann explizit nach Grenzbereichen in den zweidimensionalen Abbildungen gesucht werden, die den Übergang zwischen den Bereichen ohne und mit Abschwächung, d. h. ohne und mit Objekt darstellen. Die Lage der Grenzbereiche kann in den zweidimensionalen Abbildungen auch subpixelgenau ermittelt werden. Anhand dieser Information kann die Hüllfläche genauer ermittelt werden.

In Kombination mit dem Schritt: Ermitteln der mindestens einen zweidimensionalen Abbildung des Messvolumens, wobei der mindestens eine zu messende Teil des Objekts streifend abgebildet wird, und/oder der geometrische Parameter sich innerhalb eines vordefinierten Toleranzwinkelbereichs parallel zum Detektor erstreckt, ist in diesem Fall vorteilhaft, wenn das Objekt so orientiert ist bzw. die Aufnahmegeometrie so gewählt ist, dass die zu messenden Teile des Objekts und/oder die Bereiche, in denen die zu messenden geometrischen Parameter angeordnet sind, möglichst streifend durchstrahlt werden. Weiter kann vorteilhaft sein, eine Überdeckung mit anderen Geometrien oder Kanten zu vermeiden.

In einem weiteren Beispiel kann der Schritt: Identifizieren des mindestens einen zu messenden Teils des Objekts in der mindestens einen zweidimensionalen Abbildung und Ermitteln eines Werts des geometrischen Parameters des identifizierten mindestens einen zu messenden Teils, weiter den folgenden Unterschritt aufweisen: Ermitteln der Position des identifizierten mindestens einen zu messenden Teils im Messvolumen aus einer vorbekannten Position und Ausrichtung des Objekts im Messvolumen und einer vorbekannten Geometrie, die dem Objekt zugeordnet ist.

Um aus einer in einer zweidimensionalen Abbildung ermittelten Position oder Abweichung zu einer Referenzabbildung einen Wert eines geometrischen Parameters zu ermitteln, kann die Position des geometrischen Parameters bzw. des zu messenden Teils bzgl. der Entfernung zum Detektor in der ermittelten zweidimensionalen Abbildung verwendet werden. Dies kann aus Vorwissen über die Geometrie des Objekts und die Pose bezüglich der Aufnahmegeometrie abgeleitet werden. Das Vorwissen über die Geometrie kann z. B. von einem CAD-Modell, einer Messung desselben Objekts z. B. mit dem gleichen Detektor im Rahmen eines Vorscans oder mit einem anderen Detektor oder einer Messung eines Objekts der gleichen Nominalgeometrie stammen. Weiterhin kann eine schnelle Rekonstruktion von mehreren vorliegenden zweidimensionalen Abbildungen durchgeführt werden, um eine grobe Abschätzung der Geometrie des Objekts zu erlangen.

Gemäß einem weiteren Beispiel können im Schritt: Ermitteln mindestens einer zweidimensionalen Abbildung des Messvolumens, mindestens zwei zweidimensionale Abbildungen des Messvolumens ermittelt werden, die das Objekt mit verschiedenen Aufnahmegeometrien darstellen, wobei der Schritt: Identifizieren des mindestens einen zu messenden Teils des Objekts in der mindestens einen zweidimensionalen Abbildung und Ermitteln eines Werts des geometrischen Parameters des identifizierten mindestens einen zu messenden Teils, weiter die folgenden Unterschritte aufweist: Ermitteln einer zweidimensionalen Position des identifizierten mindestens einen zu messenden Teils des Objekts in den mindestens zwei zweidimensionalen Abbildungen; Ermitteln der Position des identifizierten mindestens einen zu messenden Teils im Messvolumen mittels der zweidimensionalen Positionen des identifizierten mindestens einen zu messenden Teils in den mindestens zwei zweidimensionalen Abbildungen und einer Änderung zwischen den verschiedenen Aufnahmegeometrien.

Es können zweidimensionale Abbildungen ermittelt werden, während die Aufnahmegeometrie geändert wird. Die Änderung der Aufnahmegeometrie kann mittels einer Änderung der relativen Position und Ausrichtung zwischen dem zu messenden Objekt und dem Detektor erfolgen. Ein zu messender Teil des Objekts wird über die ermittelten zweidimensionalen Abbildungen hinweg verfolgt, wobei mindestens zwei zweidimensionale Abbildungen ermittelt werden. Aus der Änderung der Position des zu messenden Teils über die verschiedenen zweidimensionalen Abbildungen und der Änderung der Aufnahmegeometrie kann die Position des zu messenden Teils des Objekts im Raum ermittelt werden. Hierbei können Informationen über die Änderung der Aufnahmegeometrie, ermittelt z. B. von den verwendeten Achsen, berücksichtigt werden.

Dies betrifft insbesondere die Ermittlung der Position des zu messenden Teils des Objekts parallel zu einer Durchstrahlungsrichtung bzw. Betrachtungsrichtung, die der Entfernung zum Detektor entspricht. Dies kann bei einer durchstrahlenden Messung die Position im Kegelstrahl betreffen, bei einer optischen Messung die Position im Sichtbereich der Kamera, der z. B. annähernd die Form einer Pyramide haben kann. Insbesondere kann eine Änderung der Positionierung des zu messenden Teils senkrecht zur Durchstrahlungsrichtung durchgeführt werden, um eine genaue Ermittlung der Position des zu messenden Teils bzw. der Entfernung zum Detektor zu ermöglichen. Beispielsweise kann das Objekt um die Strecke a in eine definierte Richtung verschoben werden, wobei die Strecke a bekannt sein kann, falls die Positionierung mit Hilfe von hochgenauen Achsen durchgeführt wird.

Das Verfahren kann weiter beispielsweise vor dem Schritt: Ermitteln mindestens einer zweidimensionalen Abbildung des Messvolumens, weiter die folgenden Schritte aufweisen: Ermitteln einer Ist-Aufnahmegeometrie der mindestens einen zweidimensionalen Abbildung; Ermitteln einer Soll-Aufnahmegeometrie für die mindestens eine zweidimensionale Abbildung; Ermitteln einer Abweichung zwischen der Ist-Aufnahmegeometrie und der Soll-Aufnahmegeometrie; und Korrigieren der Abweichung in der Ist-Aufnahmegeometrie.

Um sicherzustellen, dass die Aufnahmegeometrie korrekt ist, werden die Ist-Aufnahmegeometrie und Abweichungen zu der Soll-Aufnahmegeometrie ermittelt. Diese Abweichung kann mit Hilfe von Achsen des Systems zum Ermitteln von zweidimensionalen Abbildungen des Objekts korrigiert werden. Hierfür kann z. B. eine zweidimensionale Abbildung aufgenommen und mit einer zweidimensionalen Soll-Abbildung, z. B. aus vorherigen Messungen oder einer Simulation, verglichen werden. Anhand eines Vergleichs der Abbildungen kann auf die Abweichung zu der Soll-Aufnahmegeometrie geschlossen werden. Alternativ oder zusätzlich können auch weitere Detektoren oder Sensoren hierfür verwendet werden.

Gemäß einem weiteren Beispiel kann mindestens ein Markerelement an einer vordefinierten Position im Messvolumen angeordnet sein, wobei die Aufnahmegeometrie der mindestens einen zweidimensionalen Abbildung mittels des mindestens einen Markerelements ermittelt wird.

Es können damit Markerelemente im Messvolumen angebracht werden. Auf diese Weise kann die Aufnahmegeometrie für eine zweidimensionale Abbildung genau ermittelt werden. Das Wissen über die Aufnahmegeometrie kann verwendet werden, um die Aufnahmegeometrie zu überprüfen bzw. um die Abweichung zur Soll-Aufnahmegeometrie zu ermitteln, wenn eine Soll-Aufnahmegeometrie verwendet wird. Werden mehrere zweidimensionale Abbildungen bzw. die aus diesen Abbildungen abgeleiteten Messungen gemeinsam betrachtet, kann die genaue Kenntnis der Aufnahmegeometrien die Genauigkeit der Auswertung erhöhen. Die Markerelemente können in der zweidimensionalen Abbildung selbst erkannt und lokalisiert werden. Wenn genügend Markerelemente in einer zweidimensionalen Abbildung erkannt werden, können hieraus Freiheitsgrade der Aufnahmegeometrie, deren Anzahl z. B. neun sein kann, ermittelt werden. Die mathematischen Vorgehensweisen dazu sind z. B. aus der Photogrammetrie bekannt. Die Markerelemente können weiter beispielsweise mit weiteren Sensoren lokalisiert werden, um damit die Aufnahmegeometrie zu berechnen. Die Markerelemente können kodierte Messmarken sein. Bei einer durchstrahlenden Messung können die Markerelemente Kugeln oder kleine Kugeln sein, die am zu messenden Objekt, an der Aufspannung des zu messenden Objekts oder an anderen Stellen des Messvolumens fixiert sind. Die verschiedenen Kugeln können in Form einer Helix angeordnet sein. Nach Möglichkeit wird eine Überdeckung der zu messenden Teile des Objekts durch die Markerelemente vermieden.

Weiter kann das Verfahren vor dem Schritt: Ermitteln mindestens einer zweidimensionalen Abbildung des Messvolumens, zum Beispiel weiter folgende Schritte aufweisen: Ableiten einer optimalen Aufnahmegeometrie für die mindestens eine zweidimensionale Abbildung aus vorbekannten Eigenschaften der zu messenden Größe und einer Geometrie des Objekts.

Optimale Aufnahmegeometrien können in diesem Beispiel mittels des Wissens über die zu messenden geometrischen Parameter und der Geometrie des Objekts abgeleitet werden. In diesen Aufnahmegeometrien können die dimensionellen Größen mit möglichst hoher Genauigkeit gemessen werden. Das Wissen über die zu messenden geometrischen Parameter kann z. B. von einem CAD-Modell des Objekts stammen. Diese optimalen Aufnahmegeometrien können dann bei der Ermittlung der zweidimensionalen Abbildungen des Objekts verwendet werden. Dies kann vorzugsweise während der Ermittlung anhand bereits abgebildeter Teile des Objekts bzw. früher ermittelter zweidimensionaler Abbildungen durchgeführt werden. Dabei können insbesondere die Bereiche bzw. geometrische Parameter berücksichtigt werden, in denen, z. B. nach der Auswertung der bereits vorliegenden Messdaten, noch keine sicheren Werte ermittelt werden konnten. Berücksichtigt werden können weiter eine streifende Betrachtung der zu messenden Teile des Objekts. Weiter kann die Aufnahmegeometrie so gewählt werden, dass diese Bereiche in den zweidimensionalen Abbildungen sich nicht mit anderen Geometrien oder Kanten gegenseitig überdecken. Der zu messende geometrische Parameter kann bei der Ermittlung der zweidimensionalen Abbildungen möglichst parallel zum Detektor orientiert werden. Weiter können möglichst viele Markerelemente in den einzelnen zweidimensionalen Abbildungen angeordnet werden. Vorzugsweise können möglichst viele zu messende Teile des Objekts gleichzeitig gemessen bzw. alle geometrischen Parameter in möglichst wenigen zweidimensionalen Abbildungen gemessen werden.

Gemäß einem weiteren Beispiel kann im Schritt: Ermitteln mindestens einer zweidimensionalen Abbildung des Messvolumens, die mindestens eine zweidimensionale Abbildung mittels einer durchstrahlenden Messung ermittelt werden und ein weiteres Objekt den mindestens einen zu messenden Teil des Objekts berühren, wobei nach dem Schritt: Identifizieren des mindestens einen zu messenden Teils des Objekts in der mindestens einen zweidimensionalen Abbildung und Ermitteln eines Werts des geometrischen Parameters des identifizierten mindestens einen zu messenden Teils, eine Position des weiteren Objekts zur Bestimmung der Position des identifizierten mindestens einen zu messenden Teils ermittelt wird.

Mindestens ein zu messendes Teil des Objekts kann hierbei von einem weiteren Objekt angetastet werden. Das weitere Objekt berührt somit die Oberfläche des zu messenden Teils des Objekts. In der als Durchstrahlungsbild vorliegenden zweidimensionalen Abbildung kann die Position des weiteren Objekts gemessen werden und auf diese Weise auf die Position des angetasteten zu messenden Teils des Objekts geschlossen werden. Dies ist somit eine indirekte Messung. Alternativ oder zusätzlich können konventionelle taktile Sensoren als weitere Objekte verwendet werden. Diese können selbst registrieren, wenn sie die Oberfläche eines Objekts berühren bzw. antasten, z. B. durch eine kleine Auslenkung bzw. eine kleine Kraft, die auf einen Taster wirkt.

In einem weiteren Beispiel kann als Objekt eine Kugel verwendet werden, z. B. eine von taktilen Messungen bekannte Tastkugel. Vorteilhafterweise kann diese eine vergleichsweise hohe Röntgenabsorption aufweisen, damit sie in einer als Durchstrahlungsbild ermittelten zweidimensionalen Abbildung möglichst gut erkennbar ist. Weiter in diesem Beispiel das Objekt aus mehreren Richtungen durchstrahlt werden, um die Position in drei Dimensionen ermitteln zu können.

Zur Erkennung der Antastung kann in einer Abfolge von als Durchstrahlungsbild vorliegenden zweidimensionalen Abbildungen beispielsweise eine Bewegung des Tasters verfolgt werden.

Dabei kann registriert werden, wann sich diese Bewegung ändert. Wenn der Taster sich vorher auf das Objekt zubewegt hat und dann stehen bleibt, erfolgte eine Antastung. Analog kann auch der Taster stationär sein, während das Objekt bewegt wird. Wenn sich dann der Taster bewegt, erfolgte eine Antastung. Anhand dieser Änderung der Bewegung kann die Antastrichtung zurückgerechnet werden. Mit vordefinierten Informationen über den Mittelpunkt und den Radius der Tastkugel kann auf diese Weise der genaue Antastpunktpunkt und somit die Position der Oberfläche des Objekts ermittelt werden.

Anstatt einzelner Positionen können beispielsweise auch mehrere Positionen gleichzeitig angetastet werden, zum Beispiel durch einen kammartigen Aufbau der Antastelemente. Wird das Objekt oder werden die als Taster ausgebildeten Antastelemente entsprechend kontinuierlich bewegt, können auch Messlinien erfasst werden. Durch eine versetzte Anordnung der Taster können auch mehrere Messlinien gleichzeitig erfasst werden. Die Taster können z. B. federgelagert sein. Die Federlagerung kann zum Beispiel mittels Spiralfedern ausgebildet werden. Alternativ oder zusätzlich können Taster verwendet werden, die seitlich antasten und auslenken und z. B. mittels Blattfedern gelagert sind.

Im Fall von zweidimensionalen Abbildungen, die als Durchstrahlungsbilder ermittelt werden, kann in einem weiteren Beispiel, insbesondere wenn das Objekt keine hohe Absorption aufweist, d. h. lediglich einen geringen Kontrast in den zweidimensionalen Abbildungen bewirkt, flächige Bereiche des Objekts mit hochabsorbierenden Material bestrichen werden, z. B. mit einem Lack. Dann kann in den zweidimensionalen Abbildungen die Geometrie dieses Materials gemessen werden. Hiervon kann auf die Geometrie des Objekts geschlossen werden. Das aufgetragene hochabsorbierende Material kann in diesem Beispiel als Antastelement wirken.

Aus den Ergebnissen dieser indirekten Messung mit den Antastelementen, ggf. kombiniert mit Informationen über die Geometrie des Objekts, z. B. aus dem CAD-Modell, kann auf die Orientierung des Objekts im Messvolumen geschlossen werden. Diese Information über die Orientierung kann in anderen Schritten des Verfahrens verwendet werden, um z. B. die Aufnahmegeometrie zu bestimmen oder die Entfernung des Objekts von dem Detektor zu ermitteln.

Die für die indirekte Messung verwendeten Antastelemente können zum Beispiel auch als Markerelemente verwendet werden, um eine geometrische Kalibrierung durchzuführen, d. h. eine Ermittlung der neun Freiheitsgrade der Aufnahmegeometrie.

In einem weiteren Beispiel können mit Hilfe von Werkzeugen, wie z. B. Tooling Balls, geometrische Parameter, z. B. Ausrichtung und Tiefe des zu messenden Teils des Objekts, beispielsweise einer Bohrung, ermittelt werden, anstatt einzelner Antastpunkte.

Weiter betrifft die Erfindung ein Computerprogrammprodukt mit auf einem Computer ausführbaren Instruktionen, die auf einem Computer ausgeführt, den Computer dazu veranlassen, das Verfahren nach der vorhergehenden Beschreibung durchzuführen.

Vorteile und Wirkungen sowie Weiterbildungen des Computerprogrammprodukts ergeben sich aus den Vorteilen und Wirkungen sowie Weiterbildungen des oben beschriebenen Verfahrens. Es wird daher in dieser Hinsicht auf die vorangegangene Beschreibung verwiesen. Unter einem Computerprogrammprodukt kann z. B. ein Datenträger verstanden werden, auf dem ein Computerprogrammelement gespeichert ist, das für einen Computer ausführbare Instruktionen aufweist. Alternativ oder zusätzlich kann unter einem Computerprogrammprodukt beispielsweise auch ein dauerhafter oder flüchtiger Datenspeicher, wie Flash-Speicher oder Arbeitsspeicher, verstanden werden, der das Computerprogrammelement aufweist. Weitere Arten von Datenspeichern, die das Computerprogrammelement aufweisen, seien damit jedoch nicht ausgeschlossen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Flussdiagramm des computerimplementierten Verfahrens;
- Fig. 2: eine schematische Darstellung der Aufnahmegeometrie des Systems;
- Fig. 3: eine schematische Darstellung der Ausrichtung des Objekts;
- Fig. 4a-c: eine schematische Darstellung des Messvolumens;
- Fig. 5: eine schematische Darstellung einer Änderung der Aufnahmegeometrie; und
- Fig. 6a, b: eine schematische Darstellung von einem System mit Antastelementen.

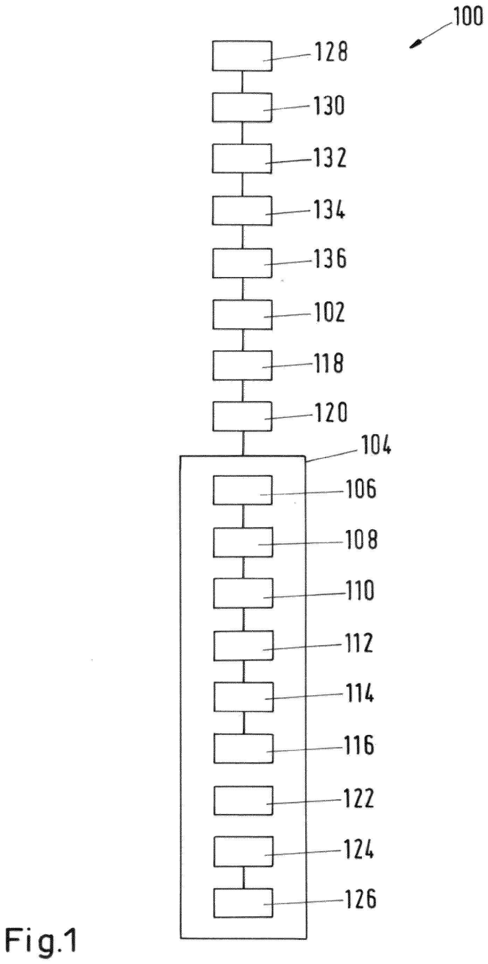

Das computerimplementierte Verfahren zum Ermitteln eines Werts eines geometrischen Parameters zumindest eines zu messenden Teils eines Objekts aus mindestens einer zweidimensionalen Abbildung eines Messvolumens wird in seiner Gesamtheit im Folgenden wie in Figur 1 dargestellt mit dem Bezugszeichen 100 bezeichnet.

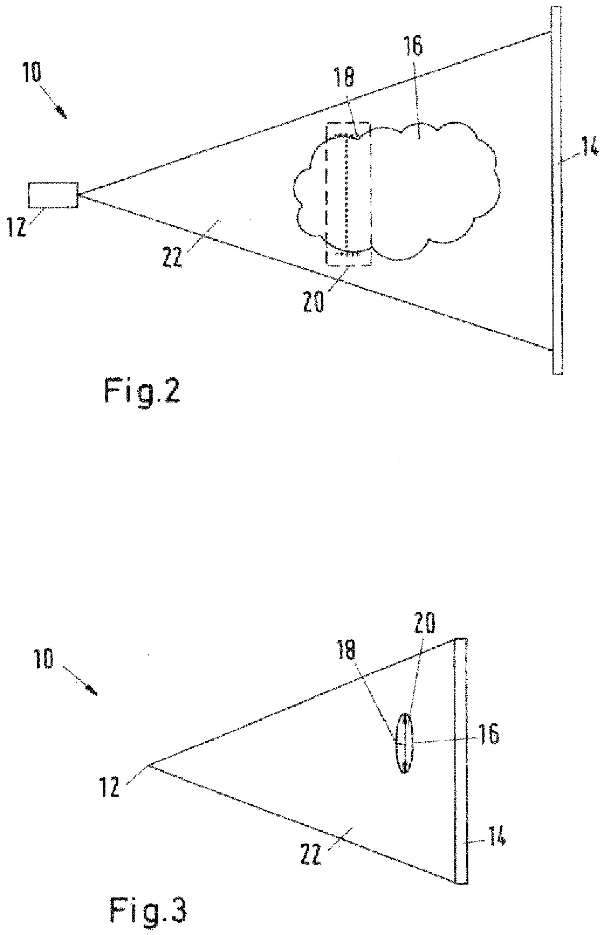

Das Verfahren 100 kann mit einem System 10 zum Ermitteln einer zweidimensionalen Abbildung verwendet werden. Wie in Figur 2 dargestellt umfasst das System 10 das Messvolumen 22 mit dem Objekt 16. Das Messvolumen 22 kann mittels des Systems 10 gemessen werden. Das System 10 umfasst dabei ein Element 12, das bei einer durchstrahlenden Messung eine Strahlungsquelle sein kann. Bei einer optischen Messung kann das Element 12 eine Kamera sein, wobei der Bildsensor der Kamera als Detektor interpretiert werden kann. Weiter kann das System 10 ein weiteres Element 14 aufweisen, dass bei einer durchstrahlenden Messung ein Detektor sein kann und einer optischen Messung zum Beispiel ein Schirm, der einen kontrastreichen Hintergrund zum Objekt 16 bildet. Das Messvolumen 22 mit dem Objekt 16 kann zwischen den Elementen 12 und 14 angeordnet sein.

Das Objekt 16 weist einen zu messenden Teil 20 auf, der in Figur 2 mit einem gestrichelten Kreis umrandet ist. Der zu messende Teil 20 des Objekts umfasst einen geometrischen Parameter, dessen Wert mit dem Verfahren 100 ermittelt werden soll. Weiter ist der zu messende Teil 20 an einer Position im Messvolumen 22 angeordnet. Verschiedene Abschnitte des zu messenden Teils 20 können an unterschiedlichen Positionen im Messvolumen 22 angeordnet sein. Das Objekt 16 kann eine Vielzahl von zu messenden Teilen 20 aufweisen. Weiter kann eine Vielzahl von geometrischen Parametern zu messen sein, die unterschiedlich sein können. Ein geometrischer Parameter kann z. B. die Position einer Kante bzw. einer Oberfläche bzgl. eines Teils des Objekts sein, der Durchmesser, die Ausrichtung und/oder die Tiefe einer Bohrung, der Durchmesser eines Bolzens, der Abstand von zwei Teilen des Objekts oder von geometrischen Merkmalen einer Bohrung oder die Entfernung zwischen zwei Punkten des Objekts sein.

Dazu wird im Schritt 102 mindestens eine zweidimensionale Abbildung des Messvolumens ermittelt. Die zweidimensionale Abbildung ist eine Projektionsabbildung des Messvolumens. Da das Messvolumen das Objekt aufweist, umfasst die mindestens eine zweidimensionale Abbildung des Messvolumens auch eine zweidimensionale Abbildung des Objekts.

Bei einer durchstrahlenden Messung weist die mindestens eine zweidimensionale Abbildung weiter eine Projektionsabbildung des zu messenden Teils des Objekts auf.

Bei einer optischen Messung weist die mindestens eine zweidimensionale Abbildung den zu messenden Teil des Objekts auf, wenn dieser zu der Kamera gerichtet war und nicht durch andere Teile des Objekts verdeckt war.

Im Schritt 102 kann in einer ersten Alternative eine einzige zweidimensionale Abbildung des Messvolumens ermittelt werden. In einer anderen Alternative können zwei oder mehr zweidimensionale Abbildungen des Messvolumens ermittelt werden. Die verschiedenen zweidimensionalen Abbildungen des Messvolumens können das Objekt aus verschiedenen Richtungen darstellen.

Wenn im Schritt 102 mindestens zwei zweidimensionale Abbildungen des Messvolumens ermittelt wurden, die das Objekt aus verschiedenen Richtungen darstellen, können in den nachfolgenden Schritten alle der mindestens zwei zweidimensionalen Abbildungen gemeinsam verwendet werden. Dabei kann zum Beispiel eine Mittelung des Ergebnisses aus den mindestens zwei zweidimensionalen Abbildungen verwendet werden oder in einem weiteren Beispiel die Informationen über die Aufnahmegeometrie genutzt werden, um eine Triangulation durchzuführen. Weiter kann auch eine Änderung zwischen den mindestens zwei zweidimensionalen Abbildungen in den nachfolgenden Schritten verwendet werden.

Weiter kann im Schritt 102 der mindestens eine zu messende Teil des Objekts streifend abgebildet werden. Dies kann zum Beispiel erfolgen, indem der zu messende Teil des Objekts in der mindestens einen zweidimensionalen Abbildung an einem Rand des Objekts angeordnet wird. Auf diese Weise kann zum Beispiel eine Dicke eines zu messenden Teils des Objekts als geometrischer Parameter mit großer Genauigkeit und wenig Aufwand ermittelt werden.

Alternativ oder zusätzlich kann der geometrische Parameter, dessen Wert ermittelt werden soll, möglichst parallel zu dem Detektor orientiert werden. So kann zum Beispiel eine Bohrung oder eine Öffnung so orientiert werden, dass ihr Durchmesser parallel zu dem Detektor angeordnet ist.

Dies ist durch Fig. 3 schematisch dargestellt. Dabei erstreckt sich der geometrische Parameter 18 parallel zu dem Element 14, das in diesem Beispiel ein Detektor sein kann.

Die Parallelität kann innerhalb eines Toleranzbereichs, der durch einen Toleranzwinkelbereich definiert wird, festgelegt werden. Der Toleranzwinkelbereich kann vordefiniert sein und zum Beispiel +5° und -5° zu einer parallelen Ebene zum Detektor tragen. Auch dies erhöht die Genauigkeit der Ermittlung des Durchmessers als geometrischen Parameter und verringert den Aufwand der Ermittlung des Werts des geometrischen Parameters.

Nach dem Schritt 102 wird in einem Schritt 104 in der mindestens einen zweidimensionalen Abbildung der mindestens eine zu messende Teil des Objekts identifiziert und ein Wert des geometrischen Parameters des identifizierten mindestens einen zu messenden Teils ermittelt. Die Identifizierung kann in einem ersten Beispiel mittels einer Mustererkennung durchgeführt werden. In einem weiteren Beispiel kann die Identifikation des zu messenden Teils implizit durch weitere Verfahren durchgeführt werden. Die sind im Folgenden beispielhaft beschrieben.

So kann in einem optionalen Unterschritt 106 des Schritts 104 mindestens eine zweidimensionale Referenzabbildung bereitgestellt werden. Diese Referenzabbildung umfasst einen bekannten Wert mindestens eines geometrischen Referenz-Parameters. Der mindestens eine geometrische Referenz-Parameter kann ein Parameter sein, der vergleichbar bzw. äquivalent mit dem geometrischen Parameter des zu messenden Teils ist.

Dabei kann optional die mindestens eine zweidimensionale Referenzabbildung ein Messvolumen abbilden, das ein Referenzobjekt mit gleicher Soll-Geometrie wie das Objekt aufweist. Da das Referenzobjekt die gleiche Soll-Geometrie wie das Objekt aufweist, umfasst dieses Referenzobjekt ebenfalls einen Referenzteil, der dem zu messenden Teil des Objekts entspricht. Ein geometrischer Parameter des Referenzteils kann damit als geometrische Referenz-Parameter für den geometrischen Parameter des zu messenden Teils fungieren.

Die zweidimensionale Referenzabbildung kann dabei insbesondere eine simulierte oder eine reale Abbildung des Referenzobjekts sein. Eine simulierte Referenzabbildung kann zum Beispiel auf einem CAD-Modell des Objekts basieren.

In einem weiteren optionalen Unterschritt 108 des Schritts 104, der sich an den Unterschritt 106 anschließt, kann ein Vergleich zwischen der mindestens einen zweidimensionalen Referenzabbildung und der mindestens einen zweidimensionalen Abbildung durchgeführt werden. Dabei kann der geometrische Referenz-Parameter, dessen Wert bekannt ist, mit dem geometrischen Parameter des zu messenden Teils verglichen werden. Auf diese Weise kann der zu messende Teil des Objekts identifiziert werden und gleichzeitig ein Wert des geometrischen Parameters des zu messenden Teils ermittelt werden. Dies vereinfacht den Schritt 104.

Der optionale Unterschritt 108 kann weiter mittels eines Bildkorrelationsverfahrens durchgeführt werden. Mit dem Bildkorrelationsverfahren kann ein impliziter und einfach durchzuführender Vergleich zwischen der zweidimensionalen Referenzabbildung und der zweidimensionalen Abbildung erfolgen. Eine separate Mustererkennung ist dann nicht weiter erforderlich, um den zu messende Teil des Bauteils zu identifizieren.

Der Schritt 104 kann weiter die optionalen Unterschritte 110, 112, 114 und 116 aufweisen.

Der optionale Unterschritt 110 betrifft das Ermitteln der Position des identifizierten mindestens einen zu messenden Teils im abgebildeten Messvolumen. Dies wird mittels der mindestens einen zweidimensionalen Abbildung durchgeführt.

Im optionalen Unterschritt 112 wird in der zweidimensionalen Referenzabbildung eine weitere Position ermittelt, die einem Referenzteil des Referenzobjekts zugeordnet ist, der den mindestens einen geometrischen Referenz-Parameter aufweist.

Die optionalen Unterschritt 110 und 112 können in beliebiger Reihenfolge oder auch gleichzeitig durchgeführt werden.

Danach wird im optionalen Unterschritt 114 eine Abweichung der ermittelten Position des identifizierten mindestens einen zu messenden Teils zu der weiteren Position des Referenzteils ermittelt. Die Abweichung kann aus verschiedenen Ausrichtungen des Objekts und des Referenzobjekts zum System zum Ermitteln der zweidimensionalen Abbildung resultieren. Alternativ kann die Abweichung aus Toleranzen bei der Herstellung des Objekts im Vergleich zum Referenzobjekts resultieren.

Im optionalen Unterschritt 116 wird mittels der ermittelten Abweichung und dem bekannten Wert des geometrischen Referenz-Parameters ein Wert des geometrischen Parameters des identifizierten mindestens einen zu messenden Teils ermittelt. Somit kann damit die Position des zu messenden Teils in der zweidimensionalen Abbildung mit hinreichender Genauigkeit bestimmt werden, da das zu messende Teil einen ähnlichen Wert für den geometrischen Parameter wie der geometrische Referenz-Parameter aufweisen muss. Damit wird der Schritt 104 weiter vereinfacht.

Wenn im Schritt 102 mindestens zwei zweidimensionale Abbildungen des Messvolumens ermittelt werden, die das Objekt aus verschiedenen Richtungen darstellen, können zwischen dem Schritt 102 und dem Schritt 104 die optionalen Schritte 118 und 120 vorgesehen werden.

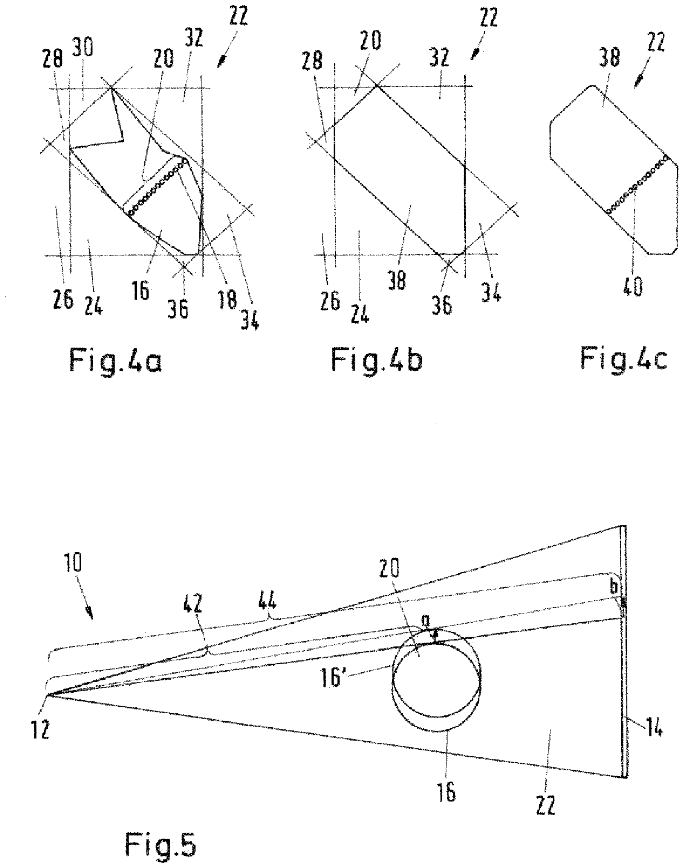

Im optionalen Schritt 118 wird mindestens ein Bereich in den mindestens zwei zweidimensionalen Abbildungen ermittelt, in dem kein Teil des Objekts angeordnet ist. Dies wird anhand der Figuren 4a bis 4c näher erläutert.

In Figur 4a ist das Messvolumen 22 mit dem Objekt 16, das den zu messenden Teil 20 umfasst, abgebildet. Der zu messende Teil 20 weist einen geometrischen Parameter 18 auf, dessen Wert ermittelt werden soll. Das Messvolumen 22 ist in verschiedene Bereiche 24, 26, 28, 30, 32, 34 und 36 eingeteilt. Die Bereiche 24 bis 36 können mittels mehrerer zweidimensionalen Abbildungen des Messvolumens 32 ermittelt werden. So werden zum Beispiel die Bereiche 24, 26 und 32 aus einer ersten zweidimensionalen Abbildung ermittelt. Die Bereiche 28 und 34 können aus einer zweiten zweidimensionalen Abbildung ermittelt werden, die das Messvolumen 22 und damit das Objekt 16 aus einer anderen Richtung abbildet, usw. Diese Bereiche 24 bis 36 sind frei von dem Objekt und weisen damit kein Teil des Objekts auf.

Gemäß Figur 4b kann damit ein Bereich 38 ermittelt werden, der das Objekt aufweist. Dieser Bereich 38 wird im optionalen Schritt 120 verwendet, um eine Hüllfläche im Messvolumen zu ermitteln, die das Objekt einhüllt. Die Hüllfläche umschließt dabei das Objekt. Das Objekt bzw. dessen Oberfläche berührt die Hüllfläche höchstens und erstreckt sich ansonsten innerhalb des von der Hüllfläche umschlossenen Bereichs. Die Hüllfläche kann konvex sein.

Im Schritt 104 wird dann mittels der Hüllfläche ein Wert 40 für den geometrischen Parameter 18 ermittelt, wie in Figur 4c dargestellt ist. Der Wert 40 gibt allerdings lediglich eine obere Grenze für den geometrischen Parameter 18 an, da der zu messende Teil 20 innerhalb der Hüllfläche liegt und die Hüllfläche dabei nicht berühren muss.

Der Schritt 104 kann weiter den optionalen Unterschritt 122 aufweisen

Im optionalen Unterschritt 122 wird die Position des identifizierten mindestens einen zu messenden Teils im Messvolumen ermittelt, indem auf eine vorbekannte Position und Ausrichtung des Objekts im Messvolumen und eine vorbekannte Geometrie, die dem Objekt zugeordnet ist, zurückgegriffen wird. Es wird damit Vorwissen über die Geometrie des Objekts verwendet. Dieses Vorwissen kann zum Beispiel aus einem CAD-Modell des Objekts, einer früheren Messung des Objekts oder einer Messung eines anderen Objekts stammen, das die die gleiche Soll-Geometrie wie das zu messende Objekt aufweist. Weiter kann das Vorwissen erlangt werden, indem zum Beispiel bei einer durchstrahlenden Messung mehrere zweidimensionale Abbildungen des Objekts bzw. des Messvolumens ermittelt werden und eine schnelle Rekonstruktion, die Volumendaten des Objekts bereitstellt, mit diesen zweidimensionalen Abbildungen durchgeführt wird. Mit dem erlangten Vorwissen kann die Entfernung des Objekts und seiner Teile von dem Detektor abgeschätzt werden. Mit der Abschätzung der Entfernung kann die Position des zu messenden Teils des Objekts genauer bestimmt werden.

Der Schritt 104 kann weiter die optionalen Unterschritte 124 und 126 aufweisen, wenn im Schritt 102 mindestens zwei zweidimensionale Abbildungen des Messvolumens ermittelt werden, die das Objekt mit verschiedenen Aufnahmegeometrien darstellen.

Mit dem optionalen Unterschritt 124 wird eine zweidimensionale Position des zu messenden Teils des Objekts in den mindestens zwei zweidimensionalen Abbildungen ermittelt. Dabei können die Koordinaten der zweidimensionalen Abbildungen verwendet werden. Das heißt eine Tiefeninformation über die Position des zu messenden Teils des Objekts ist zunächst noch nicht vorhanden.

Durch die unterschiedlichen Aufnahmegeometrien in den mindestens zwei zweidimensionalen Abbildungen des Messvolumens unterscheiden sich die ermittelten zweidimensionalen Positionen. Die Änderung zwischen den unterschiedlichen Aufnahmegeometrien ist dabei bekannt.

In optionalen Unterschritt 126 kann mit der Änderung zwischen den unterschiedlichen Aufnahmegeometrien und den ermittelten zweidimensionalen Positionen die Position des identifizierten mindestens einen zu messenden Teils Messvolumen ermittelt werden.

Dies wird anhand Fig. 5 näher erläutert, welche schematisch eine Änderung der Aufnahmegeometrie darstellt. Die Strecke a beschreibt dabei eine relative Verschiebung des Objekts 16 zum Element 14, das in diesem Beispiel ein Detektor sein kann. Das Element 12 kann in diesem Bespiel eine Strahlungsquelle sein. Das verschobene Objekt trägt das Bezugszeichen 16'. Das System 10 kann hochgenaue Achsen aufweisen (nicht dargestellt), mit denen die Aufnahmegeometrie hochgenau geändert werden kann.

Durch die Verwendung hochgenauer Achsen im System 10 zum Ermitteln von zweidimensionalen Abbildungen des Objekts 16 kann die Stecke a bekannt sein. Eine Änderung der Position des zu messenden Teils 20, z. B. die obere Kante des Objekts 16, in der zweidimensionalen Abbildung auf dem Element 14 kann zum Beispiel eine Strecke b sein. Der Wert der Strecke b lässt sich in der zweidimensionalen Abbildung messen, z. B. in Pixeln. Da die Größe des Elements 14 bekannt ist, lässt sich hieraus b in mm berechnen. Die Entfernung 42 kann der Abstand des zu messenden Teils 20 zum Element 12 sein und die Entfernung 44 der Abstand des entsprechenden Punktes des Elements 14 zum Element 12. Wenn Entfernung 44 bekannt ist, z. B. errechnet aus der Positionierung von Element 14 und Element 12 mit Hilfe von hochgenauen Achsen, lässt sich die gesuchte Entfernung 42, die Position des zu messenden Teils 20 in der Aufnahmegeometrie durch Entfernung 42 = Entfernung 44 * a / b errechnen. Mit Hilfe des Wissens über die Entfernung 42 kann die Ermittlung der Positionierung des Messobjekts und der zu messenden Teile des Objekts im Messvolumen vereinfacht werden.

Dies lässt sich analog auch auf eine optische Messung mit einer Kamera übertragen, bei der Element 12 eine Kamera sein kann und Element 14 ein Schirm. In diesem Fall würde das Bild auf dem Element 12 gemessen werden. Die oben angeführten Erläuterung wäre dementsprechend anzupassen, wobei beachtet werden muss, dass eine Kamera kein punktförmiges Bild, sondern ebenfalls eine Fläche zum Erfassen des aufzunehmenden Bilds verwendet. Streng genommen wäre in Figur 5 daher der optische Sensor der Kamera von der Spitze des dargestellten Dreiecks leicht nach links verschoben, wobei sich an der genannten Spitze ein Linsensystem befinden kann.

Neben der Ermittlung einer zweidimensionalen Abbildung vor Start und Ende der Bewegung des Objekts 16 können auch während der Bewegung zweidimensionalen Abbildungen aufgenommen werden, damit das zu messende Teil 20 besser verfolgt werden kann. Es kann dabei sinnvoll sein, die Änderung der Positionierung, die mittels eines Verfahrens der Achsen bzw. von Roboter-Armen durchgeführt werden kann, kurz zu unterbrechen, um eine zweidimensionale Abbildung ohne Bewegungsunschärfe aufnehmen zu können.

Optional kann das Verfahren 100 vor dem Schritt 102 die Schritte 128, 130, 132 und 134 aufweisen.

Im optionalen Schritt 128 wird die Aufnahmegeometrie, die für die mindestens eine zweidimensionale Abbildung verwendet wird, ermittelt. Dies wird dann als Ist-Aufnahmegeometrie bezeichnet.

Weiter wird im optionalen Schritt 130 eine Soll-Aufnahmegeometrie für die mindestens eine zweidimensionale Abbildung ermittelt. Die Soll-Aufnahmegeometrie kann zum Beispiel aus einer vorher aufgenommenen zweidimensionalen Abbildung des Objekts ermittelt werden. Alternativ oder zusätzlich kann die Soll-Aufnahmegeometrie aus einer Simulation des Objekts ermittelt werden.

Weiter wird eine Abweichung zwischen der Ist-Aufnahmegeometrie und der Soll-Aufnahmegeometrie im optionalen Schritt 132 ermittelt. Da die Ist-Aufnahmegeometrie in der Regel nicht gleich der Soll-Aufnahmegeometrie ist, wird regelmäßig eine Abweichung zu beobachten sein. Je genauer die Achsen des Systems 10 eingestellt werden können, desto geringer wird die Abweichung der Ist-Aufnahmegeometrie in der Regel sein.

Die Abweichung zwischen der Ist- Aufnahmegeometrie und der Soll-Aufnahmegeometrie wird mit dem optionalen Schritt 134 korrigiert. Die Abweichung kann zum Beispiel mittels der Achsen des Systems 10 korrigiert werden.

Für die Ermittlung der Ist-Aufnahmegeometrie und der Soll-Aufnahmegeometrie kann auf weitere Sensoren zurückgegriffen werden.

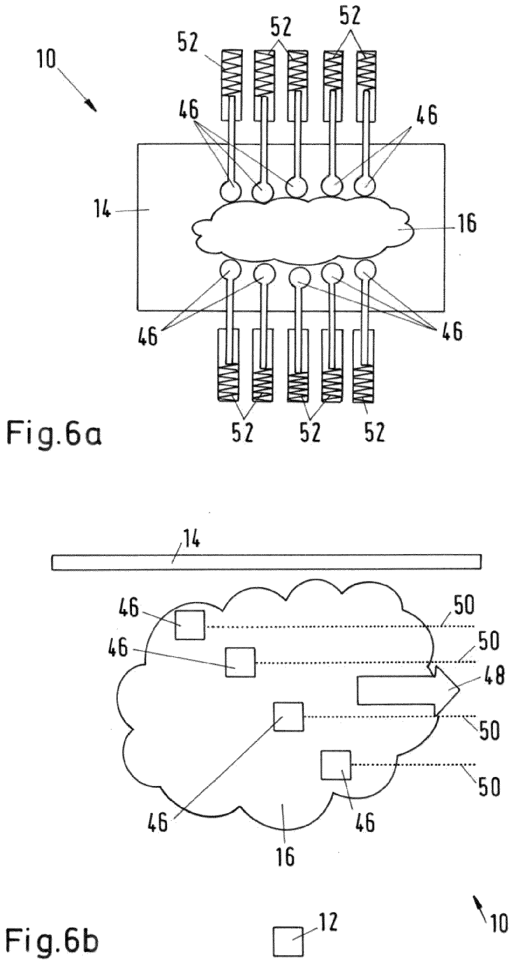

In einem weiteren Beispiel kann optional im System 10 mindestens ein Antastelement 46 angeordnet sein, wie in Figur 6a, b dargestellt. Das Antastelement 46 ist an einer vordefinierten Position im Messvolumen angeordnet. Mittels des Antastelements 46 kann die Aufnahmegeometrie der mindestens einen zweidimensionalen Abbildung ermittelt werden.

Wenn im Schritt 102 mindestens eine zweidimensionale Abbildung mittels einer durchstrahlenden Messung ermittelt und ein weiteres Objekt den mindestens einen zu messenden Teil des Objekts berührt, kann im Schritt 104 Position des weiteren Objekts zur Bestimmung der Position des identifizierten mindestens einen zu messenden Teils ermittelt werden. Hierfür können die Antastelemente verwendet werden.

Damit kann eine indirekte Messung der Position des zu messenden Teils des Objekts durchgeführt werden.

Die Antastelemente 46 sind dabei dazu ausgebildet, einen Kontakt mit der Oberfläche des Objekts 16 zu erfassen. Das Objekt 16 wird in der Aufnahmegeometrie so angeordnet, dass es möglichst alle Antastelemente 46 kontaktiert. Auf diese Weise kann die Position der Oberfläche des Objekts 16 an den Antastelemente 46 ermittelt werden.

Figur 6a zeigt dabei Antastelemente 46, die über Spiralfedern 52 federgelagert sind. Sie können daher ihre Position in der Erstreckungsrichtung der Spiralfedern 52 ändern. Die Antastelemente 46 sind weiter dabei so ausgebildet, dass sie einen hohen Kontrast in einer zweidimensionalen Abbildung bewirken.

Figur 6b zeigt Antastelemente 46, die mittels Blattfedern 50 gelagert sind. Diese Antastelemente 46 können seitlich zu den Blattfedern 50 ausgelenkt werden. Weiter kann eine Bewegung des Objekts 16 durchgeführt werden, um eine Änderung der Aufnahmegeometrie zu bewirken. Die Bewegung ist in Figur 6b mit dem Pfeil 48 schematisch dargestellt. Auf diese Weise können Messlinien erfasst werden, die die Oberfläche des Objekts 16 abtasten.

Weiter ist in Figur 6b dargestellt, dass die Antastelemente 46 versetzt zueinander angeordnet sind. Damit können mehrere Messlinien erfasst werden, die mehrere Linien auf der Oberfläche des Objekts vermessen können, ohne dass sich die Antastelemente gegenseitig verdecken.

Alternativ oder zusätzlich zu den Antastelementen 46 können Markerelemente verwendet werden, die feste, bekannte Positionen im Messvolumen aufweisen. Mit den bekannten Positionen der Markerelemente kann die Aufnahmegeometrie ermittelt werden und Abweichungen zu einer Soll-Aufnahmegeometrie ermittelt werden. In Figur 6b können z. B. die Antastelemente 46 durch Markerelemente ersetzt werden, wobei die Blattfedern 50 durch steife Halteelemente ersetzt werden, so dass die Markerelemente positionsfest in dem Messvolumen angeordnet werden.

Vor dem Schritt 102 können weitere optionale Schritte vorgesehen werden. So kann das Verfahren 100 weiter den optionalen Schritt 136 aufweisen.

Im optionalen Schritt 136 wird die optimale Aufnahmegeometrie für die mindestens eine zweidimensionale Abbildung aus vorbekannten Eigenschaften abgeleitet. Die vorbekannten Eigenschaften beziehen sich dabei auf die zu messende Größe, die dem geometrischen Parameter zu Grunde liegt, der vermessen werden soll. Weiter beziehen sich die vorbekannten Eigenschaften auf die Geometrie und das Material des Objekts.

Auch in diesem Schritt kann das Wissen über die vorbekannten Eigenschaften zum Beispiel aus einem CAD-Modell des Objekts stammen.

Nach dem Ermitteln der optimalen Aufnahmegeometrie kann diese optimale Aufnahmegeometrie für die Ermittlung der mindestens einen zweidimensionalen Abbildung verwendet werden. Damit kann die Aufnahmegeometrie optimal als die zu messenden Teile des Objekts bzw. auf die geometrischen Parameter, die ermittelt werden sollen, angepasst werden.

Falls eine Auswertung in zwei Dimensionen für bestimmte zu messende Teile zum Beispiel nicht möglich ist bzw. nur mit ungenügender Genauigkeit möglich ist, kann beispielsweise lokal eine Auswertung in drei Dimensionen durchgeführt werden. Dies kann z. B. auf Basis von aus den zweidimensionalen Abbildungen rekonstruieren Volumendaten erfolgen. Dazu muss jeweils die Aufnahmegeometrie bekannt sein.

Bei dem Vergleich mit einer zweidimensionalen Referenzabbildung kann beispielsweise auch eine noch erlaubte Minimal- und Maximal-Geometrie des Objekts als Grundlage verwendet werden. Es gibt somit mindestens zwei zweidimensionale Referenzabbildungen. Liegt die gemessene zweidimensionale Abbildung bzgl. der zu messenden Teile des Objekts innerhalb dieser beiden Grenzfälle, wird das gemessen Teil des Objekts als in Ordnung bewertet. In diesem Fall gibt es somit ggf. kein explizites Messergebnis z. B. in mm, sondern nur die Aussage "i. O." o-der "n. i. O." als Resultat der Messung.

Weiter kann zum Beispiel ein schneller Übersichtsscan, ggf. auch mit anderen Sensoren, z. B. optisch, durchgeführt werden, um die Orientierung des Objekts zu ermitteln. In diesem Fall können die Bereiche der zu messenden Teile des Objekts identifiziert und das Objekt entsprechend des Übersichtscans ausgerichtet werden.

Werden im Beispiel einer durchstrahlenden Messung zum Beispiel verschiedene zweidimensionale Abbildungen mit Verwendung unterschiedlicher Röntgenspektren (Dual-Energy bzw. Multi-Energy) für eine Aufnahmegeometrie aufgenommen, können diese verrechnet werden. In den auf diese Weise entstehenden zweidimensionalen Abbildungen können unterschiedliche Materialien besser getrennt bzw. erkannt werden. Die Genauigkeit einer Messung von Multimaterial-Objekten kann auf diese Weise erhöht werden.

Weiter betrifft die Erfindung ein Computerprogrammprodukt (nicht dargestellt), das Instruktionen aufweist, die auf einem Computer ausführbar sind. Wenn diese Instruktion auf einem Computer ausgeführt werden, veranlassen Sie den Computer dazu, das Verfahren 100 das oben beschrieben wurde durchzuführen.

Das Computerprogrammprodukt kann zum Beispiel ein Datenträger sein, auf dem ein Computerprogrammelement gespeichert ist. Das Computerprogrammelement kann die ausführbaren zu tun aufweisen. Alternativ oder zusätzlich kann das Computerprogrammprodukt ein dauerhafter oder flüchtiger Datenspeicher sein. Auch in diesem Fall umfasst das Computerprogrammprodukt ein Computerprogrammelement, das Instruktionen umfasst.

Die hier angegebene Reihenfolge der Schritte des Verfahrens 100 können, sofern logisch sinnvoll, gleichzeitig oder in einer anderen Reihenfolge ausgeführt werden.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Computerimplementiertes Verfahren zum Ermitteln eines Werts eines geometrischen Parameters zumindest eines zu messenden Teils eines Objekts aus mindestens einer zweidimensionalen Abbildung eines Messvolumens, wobei das Messvolumen das Objekt aufweist und das zu messende Teil des Objekts eine Position im Messvolumen umfasst, wobei die mindestens eine zweidimensionale Abbildung einer Aufnahmegeometrie zugeordnet ist, wobei die Aufnahmegeometrie eine geometrische Beziehung zwischen einem Detektor zum Ermitteln von zweidimensionalen Abbildungen und dem Objekt beschreibt, wobei das Verfahren (100) die folgenden Schritte aufweist:
- Ermitteln (102) mindestens einer zweidimensionalen Abbildung des Messvolumens;
- Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils.

2. Verfahren nach Anspruch 1, **dadurch gekennzeichnet, dass** der Schritt: Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils, weiter die folgenden Unterschritte aufweist:
- Bereitstellen (106) mindestens einer zweidimensionalen Referenzabbildung, die mindestens einen bekannten Wert mindestens eines geometrischen Referenz-Parameters aufweist; und
- Vergleichen (108) der mindestens einen zweidimensionalen Referenzabbildung mit der mindestens einen zweidimensionalen Abbildung.

3. Verfahren nach Anspruch 2, **dadurch gekennzeichnet, dass** die mindestens eine zweidimensionale Referenzabbildung ein Messvolumen abbildet, das ein Referenzobjekt mit gleicher Soll-Geometrie wie das Objekt aufweist, wobei die mindestens eine zweidimensionale Referenzabbildung insbesondere eine simulierte oder eine reale Abbildung des Referenzobjekts ist.

4. Verfahren nach Anspruch 2 oder 3, **dadurch gekennzeichnet, dass** der Schritt: Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils, weiter die folgenden Unterschritte aufweist:
- Ermitteln (110) der Position des identifizierten mindestens einen zu messenden Teils im abgebildeten Messvolumen mittels der mindestens einen zweidimensionalen Abbildung;
- Ermitteln (112) einer weiteren Position in der zweidimensionalen Referenzabbildung, wobei die weitere Position dem mindestens einen geometrischen Referenz-Parameters zugeordnet ist;
- Ermitteln (114) einer Abweichung der ermittelten Position zu der weiteren Position; und
- Ermitteln (116) eines Werts des geometrischen Parameters des identifizierten mindestens einen zu messenden Teils mittels der ermittelten Abweichung.

5. Verfahren nach einem der Ansprüche 2 bis 4, **dadurch gekennzeichnet, dass** im Unterschritt: Vergleichen (108) der mindestens einen zweidimensionalen Referenzabbildung mit der mindestens einen zweidimensionalen Abbildung, ein Bildkorrelationsverfahren verwendet wird.

6. Verfahren nach einem der Ansprüche 1 bis 5, **dadurch gekennzeichnet, dass** im Schritt: Ermitteln (102) mindestens einer zweidimensionalen Abbildung des Messvolumens, mindestens zwei zweidimensionale Abbildungen des Messvolumens ermittelt werden, die das Objekt aus verschiedenen Richtungen darstellen, wobei zumindest im Schritt: Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils, alle der mindestens zwei zweidimensionalen Abbildungen gemeinsam verwendet werden.

7. Verfahren nach einem der Ansprüche 1 bis 6, **dadurch gekennzeichnet, dass** im Schritt: Ermitteln (102) der mindestens einen zweidimensionalen Abbildung des Messvolumens, der mindestens eine zu messende Teil des Objekts streifend abgebildet wird, und/oder der geometrische Parameter sich innerhalb eines vordefinierten Toleranzwinkelbereichs parallel zum Detektor erstreckt.

8. Verfahren nach einem der Ansprüche 1 bis 7, **dadurch gekennzeichnet, dass** im Schritt:
Ermitteln (102) mindestens einer zweidimensionalen Abbildung des Messvolumens, mindestens zwei zweidimensionale Abbildungen des Messvolumens ermittelt werden, die das Objekt aus verschiedenen Richtungen darstellen, wobei das Verfahren (100) zwischen jenem Schritt (102) und dem Schritt: Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils, die folgenden Schritte aufweist:
- Ermitteln (118) mindestens eines Bereichs in den mindestens zwei zweidimensionalen Abbildungen, in dem kein Teil des Objekts angeordnet ist; und
- Ermitteln (120) mindestens einer Hüllfläche im Messvolumen, die das Objekt einhüllt, mittels des mindestens einen Bereichs;
wobei im Schritt: Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils, der Wert mittels der Hüllfläche ermittelt wird.

9. Verfahren nach einem der Ansprüche 1 bis 8, **dadurch gekennzeichnet, dass** der Schritt:
Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils, weiter den folgenden Unterschritt aufweist:
- Ermitteln (122) der Position des identifizierten mindestens einen zu messenden Teils im Messvolumen aus einer vorbekannten Position und Ausrichtung des Objekts im Messvolumen und einer vorbekannten Geometrie, die dem Objekt zugeordnet ist.

10. Verfahren nach einem der Ansprüche 1 bis 9, **dadurch gekennzeichnet, dass** im Schritt:
Ermitteln (102) mindestens einer zweidimensionalen Abbildung des Messvolumens, mindestens zwei zweidimensionale Abbildungen des Messvolumens ermittelt werden, die das Objekt mit verschiedenen Aufnahmegeometrien darstellen, wobei der Schritt: Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils, weiter die folgenden Unterschritte aufweist:
- Ermitteln (124) einer zweidimensionalen Position des identifizierten mindestens einen zu messenden Teils des Objekts in den mindestens zwei zweidimensionalen Abbildungen; und
- Ermitteln (126) der Position des identifizierten mindestens einen zu messenden Teils im Messvolumen mittels der zweidimensionalen Positionen des identifizierten mindestens einen zu messenden Teils in den mindestens zwei zweidimensionalen Abbildungen und einer Änderung zwischen den verschiedenen Aufnahmegeometrien.

11. Verfahren nach einem der Ansprüche 1 bis 10, **dadurch gekennzeichnet, dass** das Verfahren (100) vor dem Schritt: Ermitteln (102) mindestens einer zweidimensionalen Abbildung des Messvolumens, weiter die folgenden Schritte aufweist:
- Ermitteln (128) einer Ist-Aufnahmegeometrie der mindestens einen zweidimensionalen Abbildung;
- Ermitteln (130) einer Soll-Aufnahmegeometrie für die mindestens eine zweidimensionale Abbildung;
- Ermitteln (132) einer Abweichung zwischen der Ist-Aufnahmegeometrie und der Soll-Aufnahmegeometrie; und
- Korrigieren (134) der Abweichung in der Ist-Aufnahmegeometrie.

12. Verfahren nach einem der Ansprüche 1 bis 11, **dadurch gekennzeichnet, dass** mindestens ein Markerelement an einer vordefinierten Position im Messvolumen angeordnet ist, wobei die Aufnahmegeometrie der mindestens einen zweidimensionalen Abbildung mittels des mindestens einen Markerelements ermittelt wird.

13. Verfahren nach einem der Ansprüche 1 bis 12, **dadurch gekennzeichnet, dass** das Verfahren (100) vor dem Schritt: Ermitteln (102) mindestens einer zweidimensionalen Abbildung des Messvolumens, weiter folgende Schritte aufweist:
- Ableiten (136) einer optimalen Aufnahmegeometrie für die mindestens eine zweidimensionale Abbildung aus vorbekannten Eigenschaften der zu messenden Größe und einer Geometrie des Objekts.

14. Verfahren nach einem der Ansprüche 1 bis 13, **dadurch gekennzeichnet, dass** im Schritt:
Ermitteln (102) mindestens einer zweidimensionalen Abbildung des Messvolumens, die mindestens eine zweidimensionale Abbildung mittels einer durchstrahlenden Messung ermittelt wird und ein weiteres Objekt den mindestens einen zu messenden Teil des Objekts berührt, wobei im Schritt: Identifizieren (104) des mindestens einen zu messenden Teils des Objekts in der mindestens einen zweidimensionalen Abbildung und Ermitteln eines Werts des geometrischen Parameters des identifizierten mindestens einen zu messenden Teils, eine Position des weiteren Objekts zur Bestimmung der Position des identifizierten mindestens einen zu messenden Teils ermittelt wird.

15. Computerprogrammprodukt mit auf einem Computer ausführbaren Instruktionen, die auf einem Computer ausgeführt, den Computer dazu veranlassen, das Verfahren (100) nach einem der vorhergehenden Ansprüche durchzuführen.
